# DEMANDE DE BREVET EUROPEEN

(11) **EP 2 611 169 A1**
(43) Date de publication de la demande: **03.07.2013**
(21) Numéro de dépôt: 11306781.3
(22) Date de dépôt: 27.12.2011
(51) Int. Cl.: H04N 13/02

(54) **Dispositif d'acquisition d'images stereoscopiques**

(71) Demandeur: Thomson Licensing, 92130 Issy-les-Moulineaux (FR)
(72) Inventeur: Drazic, Valter, 35576 CESSON-SEVIGNE (FR); Kerbiriou, Paul, 35576 CESSON-SEVIGNE (FR); Schubert, Arno, 35576 CESSON-SEVIGNE (FR)
(74) Mandataire: Ruellan-Lemonnier, Brigitte

(57) **Abrégé**

Le dispositif est basé sur le principe de Wheatstone. Des miroirs (M1, M2, M3 M4) sont ajustés angulairement pour que les images stéréoscopiques droite et gauche d'une scène soient formées sur un capteur de manière à laisser libre une zone (IR) entre ces deux images. Une fente est formée entre les miroirs internes pour laisser passer, d'une part, une lumière structurée ou impulsionnelle et, d'autre part, cette lumière structurée ou impulsionnelle une fois qu'elle a été réfléchie sur des objets de la scène. Le dispositif comporte, de plus, une optique (AL) associée à la fente (F) et au système de lentilles (SL) pour former une image sur ladite zone (IR) à partir de ladite lumière structurée ou impulsionnelle réfléchie.

## Description

La présente invention concerne un dispositif d'acquisition d'images stéréoscopiques.

La présente invention se situe dans le domaine de l'acquisition d'images stéréoscopiques et plus particulièrement dans celui de l'acquisition simultanée d'images droite et gauche d'une scène à partir d'un seul et même capteur d'images.

L'un des avantages de ce type de dispositif d'acquisition est que la colorimétrie des deux images est la même du fait de l'utilisation d'un seul capteur. Par ailleurs, la complexité de mise en oeuvre de ces dispositifs est bien moindre comparée à celle des dispositifs d'acquisition qui utilisent plusieurs capteurs telle que les caméras 3D actuelles.

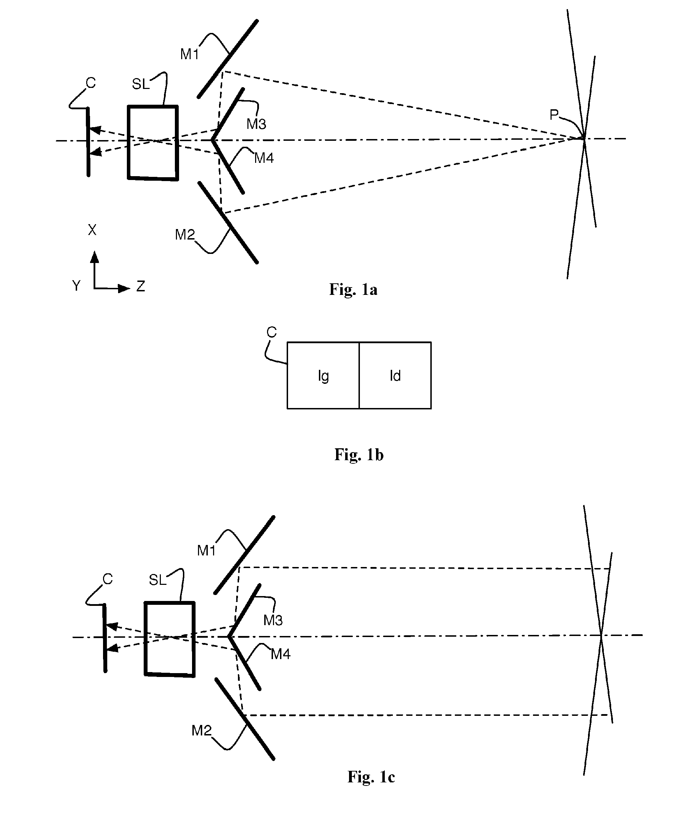

Il est connu des dispositifs d'acquisition d'images (comprenant un seul capteur d'images) qui se basent sur le principe de la stéréoscopie de Wheatstone illustré aux Fig. 1a, 1b et 1c.

Sur la Fig. 1a, est représenté schématiquement un tel dispositif d'acquisition qui comporte un capteur d'images C, des miroirs externes M1 et M2 et internes M3 et M4 qui sont ajustés angulairement et associés à un système de lentilles SL pour former des images stéréoscopiques droite Id et gauche Ig d'une scène sur le capteur C. Ainsi, les rayons lumineux émis à partir d'un point P d'une scène, se projettent sur les miroirs M1 et M2, puis M3 et M4, traversent le système de lentilles SL où ils sont focalisés pour former deux images Id et Ig sur le capteur C. Les miroirs M1 à M4 sont ajustés angulairement selon des angles différents de 45° pour permettre que les images droite Id et gauche Ig soient formées sur deux zones distinctes et jointes du capteur C (Fig. 1b).

La Fig. 1c représente une variante du dispositif de la Fig. 1a. Cette variante permet également la formation des images Id et Ig sur deux zones distinctes et jointes du capteur C mais la séparation entre ces deux zones est moins franche que celle du dispositif de la Fig. 1a : la zone de recouvrement de ces images est plus importante.

L'utilisation des miroirs dans ces dispositifs d'acquisition d'images stéréoscopiques provoque des déformations géométriques des images Id et Ig (*keystoning* en anglais). Ces déformations sont habituellement corrigées avant l'exploitation de ces images droites et gauche.

L'une de ces exploitations est de calculer une carte de disparité, encore appelée carte de profondeur, à partir des images Id et Ig ainsi corrigées géométriquement.

Toutefois, l'inventeur a observé que ce calcul de carte de profondeur n'est pas fiable dans les zones d'image peu texturées.

L'une des solutions pour fiabiliser ce calcul dans ces zones est d'inclure dans les dispositifs d'acquisition d'images stéréoscopiques un dispositif de calcul de carte de profondeur.

Un premier exemple de dispositif connu de calcul de carte de profondeur, basé sur l'émission et la réception d'une lumière structurée, comprend un projecteur apte à projeter une lumière structurée spatialement sur la scène à capturer, un capteur d'images apte à capter l'image réfléchie de cette projection sur la scène, et des moyens pour calculer une carte de profondeur à partir de l'image ainsi capturée.

Un deuxième exemple de dispositif connu de calcul de carte de profondeur, basé sur le « temps de vol » (*Time of Flight* en langue anglaise). Le principe est d'illuminer une scène avec des impulsions de lumière de durée très courtes et de mesurer le temps de parcours de ces impulsions depuis leur émission jusqu'à leur acquisition une fois que ces impulsions ont été réfléchies par un objet de la scène. La profondeur de chaque pixel est alors calculée en fonction de ce temps de parcours aller/retour des rayons lumineux. Ce dispositif comprend un projecteur apte à illuminer la scène à l'aide d'impulsions de lumière, un capteur d'images apte à capter l'image de cette illumination de la scène et à mesurer, pour chaque pixel de cette image, le décalage de temps entre le départ d'une impulsion d'illumination du projecteur et le retour des rayons de cette impulsion sur le capteur, et des moyens pour calculer une carte de profondeur à partir des mesures de ces décalages de temps.

Le projecteur de lumière structurée ou impulsionnelle et le capteur d'images de ces dispositifs de calcul de carte de profondeur sont distants l'un de l'autre d'un décalage spatial. Ce décalage spatial a soit une composante horizontale unique qui s'exprime sur l'axe horizontal X du plan image du capteur, soit une composante horizontale selon l'axe X et une composante verticale qui s'exprime sur un axe Y de ce plan image.

Dans le cas d'un dispositif de calcul de carte de profondeur basé sur l'émission et la réception d'une lumière structurée, la profondeur des pixels est estimée à partir d'une seule image formée par projection sur l'objet d'une lumière infrarouge structurée (WO2007105205). En effet, comme un éloignement d'un point de la scène, selon un axe Z perpendiculaire au plan image, engendre un décalage horizontal selon l'axe X, la mesure dans l'image de ce décalage selon l'axe X permet de déterminer la profondeur de chaque pixel de l'image en comparant l'image infrarouge acquise avec un motif positionné à une profondeur prédéterminée.

L'introduction d'un dispositif de calcul de carte de profondeur dans des dispositifs d'acquisition d'images stéréoscopiques conduit donc, selon l'état de la technique, à ajouter, entre autre, un projecteur et un nouveau capteur d'images dans le dispositif d'acquisitions d'images stéréoscopiques, ce qui augmente l'encombrement de ces dispositifs.

Le problème résolu par la présente invention est donc de fiabiliser le calcul de carte de profondeur d'un dispositif d'acquisition d'images stéréoscopiques mono-capteur sans pour autant augmenter significativement son encombrement.

A cet effet, la présente invention concerne un dispositif d'acquisition d'images stéréoscopiques comportant un capteur, des miroirs externes et internes associés à un système de lentilles pour former des images stéréoscopiques droite et gauche d'une scène sur le capteur tel que expliqué en relation avec les Fig. 1a-1c.

Le dispositif est **caractérisé en ce que** :
- les miroirs sont ajustés angulairement pour que les images stéréoscopiques droite et gauche soient formées sur le capteur de manière à laisser libre une zone entre ces deux images,
- une fente est formée entre les miroirs internes pour laisser passer, d'une part, une lumière structurée ou impulsionnelle et, d'autre part, cette lumière structurée ou impulsionnelle une fois qu'elle a été réfléchie sur des objets de la scène, et
- le dispositif comporte, de plus, une optique associée à la fente et au système de lentilles pour former une image sur ladite zone à partir de ladite lumière structurée ou impulsionnelle réfléchie.

Cette modification d'un dispositif classique basé sur le principe de Wheatstone permet de mettre en oeuvre une méthode de calcul de carte de profondeur basée sur l'émission d'une lumière structurée ou impulsionnelle sans devoir ajouter un autre capteur d'images. L'augmentation de l'encombrement de ce dispositif s'en trouve donc fortement réduite.

De plus, le dispositif est particulièrement avantageux car il conserve sa simplicité de mise en oeuvre tout en fiabilisant le calcul de la carte de profondeur.

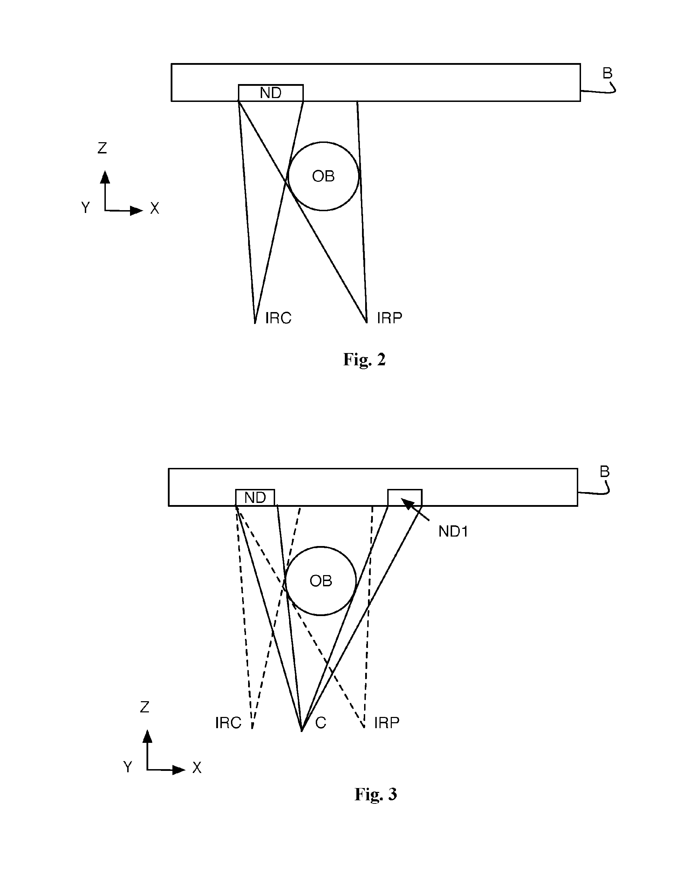

En effet, les dispositifs de calcul de carte de profondeur de l'état de la technique présentent l'inconvénient de fournir des cartes de profondeur avec des zones indéfinies qui sont dues à des instabilités de la détection des signaux lumineux sur les bords des objets d'une scène ou encore à des ombres dues à la projection tel que illustré sur les Fig. 2 et 3 dans le cas du dispositif de la demande internationale W02007105205.

Dans les Fig. 2 et 3, la scène est représentée par un fond B et un objet OB se trouvant en avant de ce fond. Le dispositif de calcul de carte de profondeur est formé d'un capteur infrarouge IRC et d'un projecteur IRP.

Le capteur IRC et le projecteur IRP sont positionnés sur un axe parallèle au plan image du capteur IRC et sont décalés l'un par rapport à l'autre selon l'axe X. Une zone indéfinie ND est alors vue par le capteur IRC. Cette zone indéfinie ND correspond à une zone dans laquelle la profondeur des pixels ne pourra pas être déterminée par la méthode basée sur une lumière structurée ou impulsionnelle car cette zone n'est pas éclairée par le projecteur de lumière infrarouge mais elle est vue par le capteur IRC.

La Fig. 3 illustre le cas où le dispositif de calcul de la carte de profondeur est inclu dans un dispositif d'acquisition d'images stéréoscopiques qui comporte, entre autre, un capteur d'images C. Ce capteur C est positionné sur le plan image du capteur IRC entre le capteur IRC et le projecteur IRP. Comme on le voit sur la Fig. 3, une zone indéfinie ND est alors vue par le capteur C. Cette zone indéfinie ND correspond à une zone dans laquelle la profondeur des pixels ne pourra pas être déterminée par la méthode basée sur une lumière structurée ou impulsionnelle car cette zone n'est pas éclairée par le projecteur de lumière infrarouge mais elle est vue par le capteur C. Une autre zone indéfinie ND1 est aussi vue par le capteur C. Cette zone indéfinie ND1 correspond à une zone dans laquelle la profondeur des pixels ne pourra pas être déterminée par la méthode basée sur une lumière structurée car cette zone n'est pas éclairée par le projecteur de lumière infrarouge et n'est pas vue par le capteur IRC.

Le positionnement du capteur C et du projecteur IRP à une distance l'un de l'autre selon l'axe X n'est donc pas une solution pour minimiser les zones de l'image vue par le capteur C dans lesquelles la profondeur de champs ne peut être définie.

Le fait que la lumière structurée réfléchie soit acquise, selon la présente invention, le long de l'axe optique du dispositif, via la fente, et non pas via un autre capteur décalé horizontalement (selon l'axe X) par rapport à cet axe optique permet de limiter, d'une part, les zones de l'image dans lesquelles la profondeur de champs ne peut être définie et, d'autre part, les instabilités de détection de signaux lumineux sur les bords des objets de la scène. La fiabilité de la carte de profondeur s'en alors trouve d'autant améliorée.

Selon un mode de réalisation, le dispositif comporte aussi un projecteur de la lumière structurée ou impulsionnelle qui est positionné par rapport au capteur pour que le décalage spatial qui les sépare n'ait pas de composante horizontale.

Ce mode de réalisation est avantageux car ce positionnement particulier du projecteur par rapport au capteur limite encore plus les zones de l'image dans lesquelles la profondeur de champs ne peut être définie.

Selon une variante relative au cas où la lumière structurée ou impulsionnelle est de type infrarouge, le dispositif comporte aussi un filtre de blocage de la lumière visible pour filtrer la lumière structurée ou impulsionnelle qui est réfléchie.

Selon une variante, le dispositif comporte aussi un filtre de blocage infrarouge pour filtrer la lumière qui est destinée à former les images droite et gauche.

Ces variantes sont avantageuses car elles permettent que les images droite, gauche et infrarouge n'interfèrent pas les unes sur les autres notamment sur leurs bordures, ce qui facilite l'exploitation de ces images, et notamment la mise en oeuvre d'une méthode de calcul de la carte de profondeur à partir de l'image infrarouge formée sur le capteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
Les Fig. 1a-1c représentent un exemple de dispositif d'acquisition d'images stéréoscopiques selon l'état de la technique.
Les Fig. 2 et 3 représentent des illustrations des zones d'image dans lesquelles la profondeur de champs ne peut être définie.
Les Fig. 4a-4b représentent un mode de réalisation du dispositif d'acquisition d'images stéréoscopiques selon la présente invention.

Le dispositif d'acquisition d'images stéréoscopiques selon la présente invention est une version modifiée d'un dispositif qui reprend le principe de la stéréoscopie de Wheatstone illustré aux Fig. 1a, 1b et 1c.

En effet, le dispositif, selon la présente invention, comporte un capteur d'images C, des miroirs externes M1 et M2 et internes M3 et M4 qui sont ajustés angulairement et associés à un système de lentilles SL pour former des images stéréoscopiques droite Id et gauche Ig d'une scène sur le capteur C.

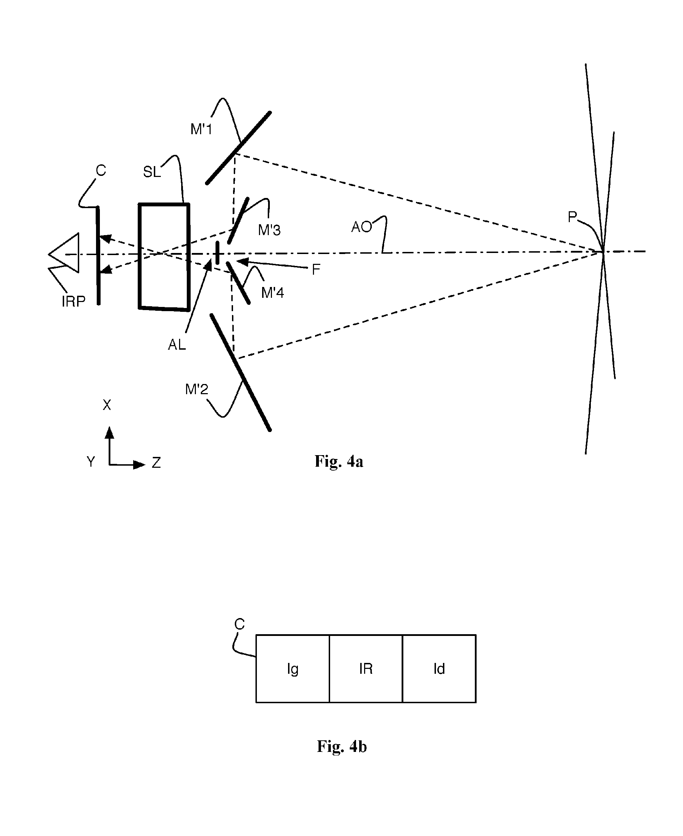

Ce dispositif est particulier car les miroirs M1, M2, M3 M4 sont ajustés angulairement pour que les images stéréoscopiques droite Id et gauche Ig soient formées sur le capteur non pas côte à côte comme c'est habituellement le cas (Fig. 1b) mais de manière à laisser libre une zone IR entre ces deux images (Fig. 4b).

De plus, selon une autre caractéristique du dispositif, une fente F est formée entre les miroirs internes M3 et M4 pour laisser passer, d'une part, une lumière structurée émise par un projecteur IRP et, d'autre part, une lumière structurée une fois qu'elle a été réfléchie sur des objets de la scène.

Selon une autre caractéristique, le dispositif comporte aussi une optique AL qui est associée avec la fente F et le système de lentille SL pour former une image sur ladite zone IR à partir de ladite lumière structurée réfléchie.

Ainsi, lorsqu'une image stéréoscopique doit être acquise par le dispositif, le projecteur IRP émet une lumière structurée par exemple de type infrarouge. Les images droite Id et gauche Ig sont classiquement formés sur le capteur C via les miroirs externes et internes. La lumière structurée qui est réfléchie sur les objets de la scène, traverse la fente F et une image infrarouge est formée sur la zone IR.

Selon un mode de réalisation, le projecteur IRP est positionné par rapport au capteur C pour que le décalage spatial qui les sépare n'ait pas de composante horizontale. Ainsi, les centres optiques du projecteur IRP et du capteur C sont portés par un segment de droite qui n'a aucune composante horizontale (selon l'axe X du repère du plan image).

Selon une variante relative au cas où la lumière structurée est de type infrarouge, le dispositif comporte aussi un filtre de blocage de la lumière visible pour filtrer la lumière structurée réfléchie.

Selon une variante, le dispositif comporte aussi un filtre de blocage infrarouge pour filtrer la lumière qui est destinée à former les images droite et gauche.

Selon un mode de réalisation de cette dernière variante, ces filtres sont de type dichroïque.

## Revendications

1. Dispositif d'acquisition d'images stéréoscopiques comportant un capteur (C), des miroirs externes (M1, M2) et internes (M3 M4) associés à un système de lentilles (SL) pour former des images stéréoscopiques droite (Id) et gauche (Ig) d'une scène sur le capteur (C), **caractérisé en ce que** :
- les miroirs (M1, M2, M3 M4) sont ajustés angulairement pour que les images stéréoscopiques droite et gauche soient formées sur le capteur de manière à laisser libre une zone (IR) entre ces deux images,
- une fente (F) est formée entre les miroirs internes (M3 M4) pour laisser passer, d'une part, une lumière structurée ou impulsionnelle et, d'autre part, cette lumière structurée ou impulsionnelle une fois qu'elle a été réfléchie sur des objets de la scène, et
- le dispositif comporte, de plus, une optique (AL) associée à la fente (F) et au système de lentilles (SL) pour former une image sur ladite zone (IR) à partir de ladite lumière structurée ou impulsionnelle qui est réfléchie.

2. Dispositif selon la revendication 1, qui comporte également un projecteur (IRP) de la lumière structurée ou impulsionnelle qui est positionné par rapport au capteur (C) pour que le décalage spatial qui les sépare n'ait pas de composante horizontale.

3. Dispositif selon l'une des revendications 1 à 2, la lumière structurée ou impulsionnelle étant de type infrarouge, le dispositif comporte aussi un filtre de blocage de la lumière visible pour filtrer la lumière structurée ou impulsionnelle qui est réfléchie.

4. Dispositif selon l'une des revendications 1 à 3, qui comporte aussi un filtre de blocage infrarouge pour filtrer la lumière qui est destinée à former les images droites et gauche.

5. Dispositif selon la revendication 4, dans lequel ces filtres sont de type dichroïque.
